# EUROPÄISCHE PATENTSCHRIFT

(11) **EP 0 520 335 B1**
(45) Veröffentlichungstag und Bekanntmachung des Hinweises auf die Patenterteilung: **23.08.1995**
(21) Anmeldenummer: 92110382.6
(22) Anmeldetag: 19.06.1992
(51) Int. Cl.: F25B 17/08, F25B 35/04

(54) **Sorptionssystem mit regenerativem Wärmetausch**
Sorption system with regenerative heat exchange
Système à sorption avec échange régénératrice de chaleur

(30) Priorität: 26.06.1991 DE 4121131
(43) Veröffentlichungstag der Anmeldung: 30.12.1992
(73) Patentinhaber: ZEO-TECH Zeolith Technologie GmbH, D-85716 Unterschleissheim (DE)
(72) Erfinder: Maier-Laxhuber, Peter K., Dr., W-8000 München 60 (DE)

(56) Entgegenhaltungen:
- DE-C- 505 267
- FR-A- 2 470 356
- US-A- 2 087 939
- US-A- 2 287 172
- US-A- 4 138 861
- US-A- 4 368 623
- US-A- 4 637 218

## Beschreibung

Die Erfindung betrifft ein Sorptionssystem zum regenerativen Wärmeaustausch zwischen mindestens zwei Sorptionsmittelbehältern gem. dem Oberbegriff des Anspruchs 1

Bei Vorrichtungen und Verfahren dieser Art wird prinzipiell ein leichter flüchtiges Arbeitsmittel von einem schwerer flüchtigen Sorptionsmittel dampfförmig unter Wärmefreisetzung sorbiert und anschließend durch Wärmezufuhr wieder desorbiert, dh. vom Sorptionsmittel getrennt. Das Sorptionsmittel kann dabei sowohl in flüssiger als auch fester Form vorliegen. Bei flüssigen Sorptionsmitteln läßt sich das mit Arbeitsmittel angereicherte Sorptionsmittel zwischen Absorber und Desorber umpumpen. Feste Sorptionsmittel sind hingegen nicht pumpfähig. Sie verbleiben während der thermischen Zyklierung immer im selben Behälter, der je nach Temperaturniveau die Funktion des Adsorbers bzw. des Desorbers einnimmt. Um also das Arbeitsmittel aus dem Sorptionsmittel zu desorbieren, muß der Adsorber samt Sorptionsmittelfüllung und Wärmetauschern von der relativ niedrigen Adsorptionstemperatur auf die relativ hohe Desorptionstemperatur erwärmt und anschließend wieder gekühlt werden.

Während bei flüssigen Sorptionsstoffpaaren ein Wärmeaustausch zwischen armer und reicher Lösung auf relativ einfache Weise in einem separaten Wärmewechsler möglich ist, ist dies bei festen Sorptionsstoffen nur sehr schwierig realisierbar.

Lösungsansätze hierzu finden sich beispielsweise in der DE-OS 3207656.8. Hier wird in einer stationären Anlage ein Teil der fühlbaren Behälter- und Sorptionsmittelwärme mittels eines Wärmeträgermediums und relativ aufwendiger Anlagentechnik zwischen den beiden Sorptionsmittelbehältern übertragen. Damit gelingt es, die in einem ersten Sorptionsmittelbehälter zur Erwärmung des Sorptionsmittels und zur Desorption des Arbeitsmittels eingebrachte Antriebswärme, bei dessen Abkühlung, zumindest teilweise, in einen zweiten Sorptionsmittelbehälter zu übertragen. Für die Erwärmung des zweiten Sorptionsmittelbehälters ist deshalb weniger Antriebswärme aufzuwenden. Anzustreben ist, möglichst viel Wärme zwischen den Sorptionsmittelbehältern auszutauschen. In diesen Fällen würde sich das Wärmeverhältnis, das ist das Verhältnis von erzeugter Kälte zu aufgewandter Antriebswärme, deutlich verbessern.

Eine weitere Möglichkeit, Wärme zwischen zwei Sorptionsmittelbehältern auszutauschen, ist in "Zeolites: Facts, Figures, Future; herausgegeben von P.A. Jacobs und R.A. van Santen auf Seite 519 ff; 1989 Elsevier Science Publishers B.V. Amsterdam" und in der US-A-4 637 218 beschreiben. Hier werden zwei Sorptionsmittelbehälter von einem Öl- bzw. Luftkrieslauf so beheizt, daß während einer ersten Phase Öl/Luft vom ersten Sorptionsmittelbehälter kommend in einem Erhitzer weiter erwärmt wird und in diesem Zustand in den zweiten Sorptionsmittelbehälter einströmt, sich dort abkühlt, das Sorptionsmittel erhitzt und somit das Arbeitsmittel desorbiert. Im Anschluß daran wird der Öl-/Luftstrom über einen Öl/Luft-Wärmetauscher weiter gekühlt und über eine Zirkulationspumpe zurück in den ersten Sorptionsmittelbehälter gepumpt, wo er sich erwärmt und das Sorptionsmittel abkühlt. Während der folgenden Phase wird die Öl-/Luftströmungsrichtung umgekehrt, so daß nunmehr der kalte Öl-/Luftstrom von der Zirkulationspumpe in den zweiten Sorptionsmittelbehälter gefördert wird, sich dort erwärmt und das Sorptionsmittel abkühlt. Nach Verlassen dieses zweiten Sorptionsmittelbehälters, wird der Öl-/Luftstrom wieder mittels des Erhitzers erwärmt und im heißen Zustand in den ersten Sorptionsmittelbehälter gefördert, um dort das Sorptionsmittel zu erhitzen und um sich selbst abzukühlen. Mit Hilfe dieses Öl-/Luftkreislaufes wird somit in jeder Phase ein Sorptionsmittelbehälter abgekühlt und ein anderer erwärmt. Über den Erhitzer müssen lediglich die Wärmeverluste ausgeglichen werden. Dieses Ziel kann aber nur dann erreicht werden, wenn die Wärmetauscher in den Sorptionsmittelbehältern so ausgestaltet sind, daß die Austrittstemperaturen des Öl-/Luftstromes aus den Sorptionsmittelbehältern möglichst lange auf konstant niedriger bzw. konstant hoher Temperatur gehalten werden. Dies bedingt allerdings innerhalb der festen Sorptionsmittelfüllung einen langsam fortschreitenden, aber scharf begrenzten Temperatursprung entlang der Wärmetauscherfläche aufrechtzuerhalten.

Diese Forderungen führen zu Wärmetauschergeometrien, bei denen jeweils nur ein relativ kleiner Bereich der installierten Wärmetauscherfläche aktiv Wärme zwischen dem Öl-/Luftkreislauf und dem festen Sorptionsmittel austauscht. Die größere, restliche Wärmetauscherfläche ist während der einzelnen Teilbetriebsphasen wirkungslos. In der Praxis bedarf es hierzu extrem großer Wärmetauscherflächen, verbunden mit entsprechend hohen Investitionen.

Ausgeführte Anlagen dieser Art zeigen weitere gravierende Nachteile. Bedingt durch den scharfen und begrenzten Temperatursprung entlang des Strömungsweges, wird zwangsläufig die Sorptionsmittelfüllung innerhalb eines Sorptionsmittelbehälters zunächst nur nahe dem Eintritt des heißen Öl-/Luftkreislaufes erwärmt. Die dabei entstehende Desorptions-Front wandert dann bis zum Ende dieser Teilphase durch die gesamte Sorptionsmittelfüllung. Beim Erwärmen des Sorptionsmittels wird das Arbeitsmittel dampfförmig desorbiert. Da jedoch die noch nicht erwärmten Sorptionsmittelbereiche auf Adsorptionstemperaturniveau liegen, wird das desorbierte Arbeitsmittel nicht wie gewünscht in eine angeschlossene Arbeitsmitteldampfsenke verflüssigt, sondern in dem noch nicht erhitzten Sorptionsmittelbereich re-adsorbiert. Dies führt dazu, daß erst nach einer relativ langen Umschaltpause der erste Arbeitsmitteldampf in der Arbeitsmittelsenke verflüssigt wird.

Versuche ergaben, daß diese Pause bis zu 50% der Gesamtzyklusdauer betragen kann. Durch die Re-Adsorption werden zudem die Bereiche des noch nicht durch den Öl-/Luftkreislauf erwärmten Sorptionsmittels erhitzt. Von diesen erhitzten Sorptionsmittelbereichen wird der Öl-/Luftstrom, vor Verlassen des Sorptionsmittelbehälters, ungewollt erhitzt. Der geforderte, scharfe und begrenzte Temperatursprung innerhalb des Öl-/Luftkreislaufes wird dadurch größtenteils wieder zunichte gemacht. Derselbe negative Effekt tritt selbstverständlich auch im umgekehrten Fall, der Adsorptionsphase, auf.

Ein weiterer Nachteil besteht darin, daß durch das relativ langsam fließende Öl und durch den langen Strömungsweg im Wärmetauscher eine relativ große Ölmenge im Kreislauf zykliert werden muß. Das System wird dadurch träge, so daß beispielsweise nach Inbetriebsetzung der Anlage bis zu 30 Minuten vergehen, bis die erste Kälteproduktion einsetzt. Für relativ kurze Betriebszeiten oder gar einen Taktbetrieb ist diese Vorrichtung deshalb wenig geeignet.

Darüberhinaus ist Öl brennbar. Ein Ölkreislauf braucht entsprechende Sicherheitsmaßnahmen gegen Überlaufen und Entzündung, sowie relativ hohe Antriebsenergien für die Zirkulationspumpe und aufwendige Wärmetauscher zum Erhitzen bzw. Abkühlen des Ölstromes.

Bei der Verwendung von Luft als Wärmeträgermedium ist mit erheblichen Strömungswiderständen zu rechnen, da systembedingt der Wärmetauscher sehr lang sein muß und deshalb zwangsläufig mehrere Umlenkungen aufweisen muß. Der daraus resultierende, hohe Energieaufwand für die Luftgebläse reduziert in erheblichem Ausmaß den zu erwartenden Wirkungsgrad.

Aufgabe der vorliegenden Erfindung ist es, eine Sorptionssystem anzugeben, welches einen regenerativen Wärmewechsel zwischen zwei Sorptionsmittelbehältern realisert, und beidem der Aufwand an Material und Antriebswärme gering und die Teilbetriebsphasen kurz sind.

Gelöst wird diese Aufgabe durch die kennzeichnenden Merkmale des Patentanspruches 1.

Ziel der erfindungsgemäßen Wärmetauscher-Anordnung ist also nicht wie aus dem Stand der Technik bekannt, die gesamte Sorptionsmittelfüllung auf ein möglichst einheitliches hohes bzw. niedriges Temperaturniveau zu bringen, sondern zwischen Eingang und Ausgang der Wärmetauscher eine möglichst große Temperaturspreizung zu erzielen. Entlang des Wärmetauschers entsteht ein nahezu linearer Temperaturgradient.

Da in aller Regel der Arbeitsmitteldampfdruck innerhalb der Sorptionsmittelbehälter gleich ist, schwankt jede Sorptionsmittelpartie - abhängig vom Temperaturbereich - zwischen unterschiedlichen Beladungskonzentrationen. Ziel der Wärmetauschergeometrie ist es, in jeder Sorptionsmittelpartie eine möglichst große Beladungsbreite zu realisieren und gleichzeitig die Wärmeübertragung an das Wärmeträgermedium so zu optimieren, daß möglichst viel Wärme zwischen den beiden Sorptionsmittelbehältern übertragen werden kann.

Abgesehen von unvermeidbaren Wärmeverlusten muß durch den Erhitzer lediglich die Wärmemenge zugeführt werden, welche das Gasgemisch aus dem jeweils zweiten Sorptionsbehälter austrägt. Diese ist, je nach Optimierung der Wärmetauscher nur ein Bruchteil, der sonst zur Desorption eines Sorptionsbehälters notwendigen Wärmemenge. Die Leistungsziffer, die beispielsweise bei einem Zeolith/Wasser-Sorptionsstoffpaar ohne inneren Wärmetausch bei 0,3 bis 0,4 liegt, kann mit Hilfe der erfindungsgemäßen Vorrichtung auf Werte über 1 verbessert werden.

An die Stelle der Öl-Zirkulationspumpe kann ein einfaches Luftgebläse treten, welches weniger Antriebsenergie und keine Sicherheitsvorkehrungen benötigt. Darüberhinaus wird das Gesamtgewicht der Anlage durch die fehlenden Sicherheitseinrichtungen und die fehlende Ölfüllung deutlich reduziert. Auch die Regelung des Massendurchsatzes des Gasgemisches durch die entsprechenden Wärmetauscher sind wesentlich einfacher als bei einem Ölkreislauf.

Beim Einsatz von Gasen anstelle flüssiger Wärmeträgermedien ist kein eng begrenzter Temperatursprung innerhalb der Sorptionsmittelfüllung zu erzielen. Diese Einschränkung wird aber dadurch kompensiert, daß die Wärmetauschergeometrie so gewählt ist, daß zwischen dem Eintritt des Wärmeträger-Gasgemisches und dem Austritt ein relativ hoher Temperaturgradient auftritt. Bei der Umkehr der Strömungsrichtung des Gasgemisches bleibt dieser Temperaturgradient erhalten. Nur das Temperaturniveau ändert sich; bei der Betriebsweise als Adsorber ist dies niedrig, bei der Betriebsweise als Desorber entsprechend hoch.

Bei der Verwendung von Zeolith als Sorptionsmittel kann ein weiter Temperaturbereich genutzt werden. So schwankt beispielsweise am tieferen Temperaturende der Sorptionsmittelfüllung die Temperatur zwischen 40 °C während der Adsorptionsphase und 160 °C während der Desorptionsphase, während gleichzeitig am heißen Ende der Sorptionsmittelfüllung die Temperaturschwankungen zwischen 280 °C und 140 °C liegen können.

Besonders vorteilhaft ist die Erhitzung des Gasgemisches zwischen den beiden Wärmetauschern durch die Vermischung mit heißen Gasen, insbesondere Verbrennungsgasen. Auf diese Weise entfällt ein weiterer Wärmetauscher mit entsprechend großer Wärmetauscheroberfläche. Die heißen Gase können beispielsweise Auspuffgase eines mobilen oder stationären Verbrennungsmotors sein oder aber auch direkt von einem Öl- oder Gasbrenner erzeugt werden. Im Erhitzer werden somit die heißen Verbrennungsgase mit der im ersten Wärmetauscher vorgewärmten Luft vermischt, strömen gemeinsam durch den Wärmetauscher des zweiten Sorptionsbehälters und kühlen sich dabei unter Wärmeabgabe an die Sorptionsmittelfüllung ab. Während der nächsten Teilbetriebsphase ist die Strömungsrichtung der Luft umgekehrt, so daß nunmehr die Abgase samt vorgewärmter Luft durch den ersten Wärmetauscher geleitet werden. Auf diese Weise sind also die Wärmetauscher Teil der Abgasleitungen. Die Strömungsrichtung der Abgase wird dabei einzig und allein durch die vorgegebene Strömungsrichtung des Gasgemisches bestimmt.

Die Strömungsrichtung des Gasgemisches kann dabei vorzugsweise über Luftgebläse oder Ventilatoren erfolgen. Aber auch eine natürliche Strömung, wie sie beispielsweise durch den Auftrieb heißer Gasgemische erfolgt, kann für bestimmte Anwendungen sinnvoll sein. Die natürliche Strömung kann dabei durch den Zusatz von Strömungshilfen, wie beispielsweise den Sogeffekt eines Abgaskamines, unterstützt werden.

Der Antrieb des Gebläses bzw. Ventilators zur Förderung des Gasgemisches wird in der Regel über Elektromotoren erfolgen. Aber auch der Antrieb durch die heißen Verbrennungsgase selbst, wie dies beispielsweise mit Abgasturbinen möglich ist, kann sinnvoll sein.

Ein Wechsel der Strömungsrichtung kann in diesen Fällen durch geeignete Klappenstellungen erfolgen, wobei der Zeitpunkt der Umstellungen beispielsweise über Thermostate angezeigt wird. Vorteilhaft sind auch Bi-Metalle oder sog. Memory-Metalle, welche bei einer definierten Temperatur eine große Dehnung aufweisen.

Ein weiterer Vorteil bei der Benutzung von Gasgemischen als Wärmeträgermedium besteht darin, däß das Wärmeträgermedium selbst nur eine kleine fühlbare Wärmekapazität hat. Dadurch ist bei einer geeigneten Wärmetauschergeometrie eine schnellere Umschaltung der Strömungsrichtung möglich. Dies führt zu kürzeren Zyklenzeiten und höheren Sorptionsleistungen. Andererseits kann bei gleicher Sorptionsleistung die Sorptionsmittelmenge und das Anlagenvolumen reduziert werden.

Besonders vorteilhafte Wärmetauschergeometrien lassen sich durch die Verwendung von sog. Metall-Wellschläuchen erzielen. Hierbei ist das Sorptionsmittel im Innenbereich des Wellschlauches, insbesondere in den Wellenbergen, eingebettet. In der Mitte des Wellschlauches verläuft durch die Sorptionsmittelfüllung ein Strömungskanal für den Arbeitsmitteldampf. Die Schlauchenden sind mit der jeweiligen Arbeitsmitteldampfsenke bzw. -quelle verbunden. Mehrere dieser Wellschläuche können zu einem Bündel angeordnet werden und von außen quer zur Wellschlauchachse durchströmt werden. Auf diese Weise läßt sich ein sehr effizienter Sorptionsmittelbehälter aufbauen, der im wesentlichen nur aus Wärmetauschern (Wellschläuche) besteht. Wellschläuche sind druck- und vakuumfest, und bedingt durch die Wellung aus sehr dünnwandigen Blechen herstellbar. Dadurch wird das Behältergewicht, bezogen auf die Sorptionsmittelfüllung, besonders klein. Die Anordnung in Bündeln führt dazu, daß quasi jeder Wellschlauch einen für ihn spezifischen, je nach Lage innerhalb des Wellschlauchbündels, Temperaturbereich durchläuft. So kann beispielsweise die tiefste Sorptionstemperatur eines Wellschlauches bei 100 °C und seine höchste Desorptionstemperatur bei 240 °C liegen, während das Sorptionsmittel im benachbarten Wellschlauch tiefste Adsorptionstemperaturen von 115 °C und höchste Desorptionstemperaturen von 255 °C erreicht. Damit wird das angestrebte Ziel, für jede Sorptionsmittelpartie einen möglichst großen Temperaturschwankungsbereich zu erhalten, in optimaler Weise erreicht.

Bei der Verwendung von Zeolith als Sorptionsmittel und Wasser als Arbeitsmittel arbeitet das gesamte Sorptionssystem in jeder Betriebsphase im Unterdruck. Dies hat zur Folge, daß bedingt durch die Flexibilität der Wellschläuche, der Schlauch in axialer Richtung verkürzt wird. Dadurch wird jede Welle auf die feste Zeolith-Füllung innerhalb der Wellen gepreßt und der Wärmeübergang vom Gasgemisch auf die innere Sorptionsmittelfüllung in idealer Weise verbessert.

Gute Resultate werden aber auch erzielt, wenn Wellschläuche im Außenbereich in den Wellen-Tälern mit festem Sorptionsmittel angefüllt sind und das Gasgemisch in axialer Richtung innerhalb des Wellschlauches geführt wird. Auch hier entsteht ein Temperaturgradient zwischen dem Eintritt des Gasgemisches und dem Austritt aus dem Wellschlauch. Dies bedeutet, daß Sorptionsmittelpartien am heißen Ende des Wärmetauschers auf deutlich höherem Temperaturniveau arbeiten, als Sorptionsmittelpartien am entgegengesetzen Ende des Wärmetauschers.

In der Zeichnung sind vorteilhafte Sorptionsmittelbehälter-Anordnungen angegeben.

Es zeigen:
Fig. 1, eine Sorptionsmittelbehälter-Anordnung während der ersten Teilbetriebsphase,
Fig. 2, die Sorptionsmittelbehälter-Anordnung nach Fig. 1 während der zweiten Teilbetriebsphase,
Fig. 3, eine Sorptionsmittelbehälter-Anordnung mit einer Mischkammer und einer Umschaltklappe,
Fig. 4, eine Sorptionsmittelbehälter-Anordnung mit Luftgebläse und
Fig. 5, eine weitere Sorptionsmittelbehälter-Anordnung mit Klappensteuerung unter Nutzung des Fahrtwindes.

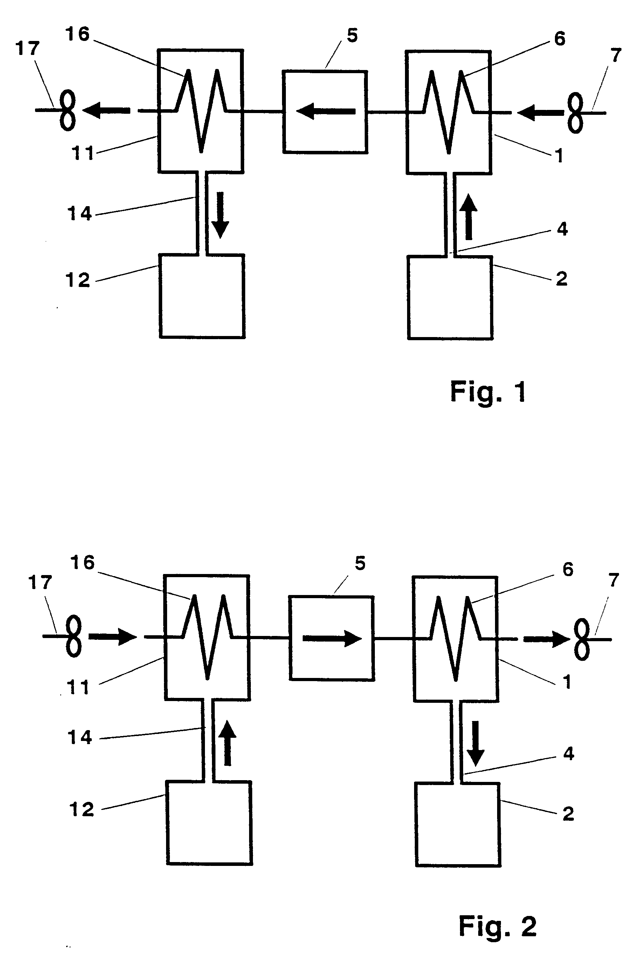

Fig. 1 und Fig. 2 zeigen Prinzipdarstellungen der erfindungsgemäßen Sorptionsmittelbehälter-Anordnungen und erläutern das damit durchgeführte Sorptionsverfahren. Sorptionsmittelbehälter 1 und 11 stehen über Arbeitsmitteldampfleitungen 4 und 14 mit Arbeitsmitteldampfsenken bzw. Arbeitsmitteldampfquellen 2 und 12 in Verbindung. Die Arbeitsmitteldampfsenken bzw. -quellen sind im einfachsten Fall Kondensatoren bzw. Verdampfer, können aber auch in jeder bekannten Weise aufgebaut werden. Ihre Funktion liegt lediglich darin, den Sorptionsmittelbehältern 1 und 11 im richtigen Augenblick Arbeitsmitteldampf zur Verfügung zu stellen bzw. Arbeitsmitteldampf abzunehmen. Eine spezielle Anordnung für die Arbeitsmitteldampfquellen bzw. -senken ist beispielsweise aus der DE OS 35 21 484.8 bekannt.

Durch die (nicht gezeichnete) Sorptionsmittelfüllung der Sorptionsmittelbehälter 1 und 11 verlaufen Wärmetauscher 6 und 16. Diese sind über einen Erhitzer 5 strömungsmäßig verbunden. Über Ventilatoren 7 und 17 wird Umgebungsluft angesaugt und durch den Wärmetauscher 6 geleitet, wobei diese das Sorptionsmittel abkühlt und sich selbst erwärmt. Im Erhitzer 5 wird anschließend durch Zufuhr von Energie, die aus dem Wärmetauscher 6 ausströmende Luft weiter erwärmt und in den Wärmetauscher 16 eingeblasen. Die dort befindliche Sorptionsmittelfüllung erwärmt sich dadurch, während die Luft sich abkühlt und im abgekühlten Zustand vom Ventilator 17 wieder in die Umgebung ausgetragen wird.

In dieser ersten Teilphase gem. Fig. 1 wird demnach aus dem Sorptionsmittel im Sorptionsmittelbehälter 11 Arbeitsmitteldampf desorbiert, durch den Dampfkanal 14 in die Arbeitsmitteldampfsenke 12 geleitet und dort verflüssigt. Zeitgleich wird im Sorptionsmittelbehälter 1 vom dortigen Sorptionsmittel Arbeitsmitteldampf angesaugt und adsorbiert. Der Arbeitsmitteldampf strömt von der Arbeitsmitteldampfquelle 2 durch den Arbeitsmitteldampfkanal 4 zum Sorptionsmittelbehälter 1. Die hier freiwerdende Adsorptionswärme wird ebenso wie die fühlbare Wärme des Wärmetauschers 6 an die Luftströmung abgegeben. Im Wärmetauscher 16 wird aus dem Luftstrom die fühlbare Wärme des Wärmetauschers 16 sowie die fühlbare Wärme des Sorptionsmittels und die Desorptionswärme für das Arbeitsmittel aufgenommen. Entlang der Wärmeträgerströmung - innerhalb der Wärmetauscher 6 und 16 - entsteht dadurch ein Temperaturgradient, welcher an den Schnittstellen zum Erhitzer 5 in beiden Sorptionsmittelbereichen am höchsten ist, während die entgegengesetzten Enden auf entsprechend tieferem Temperaturniveau liegen.

In Fig. 2 ist bei der Sorptionsmittelbehälter-Anordnung gem. Fig. 1 die zweite Teilbetriebsphase dargestellt. Während dieser Phase wird, getrieben durch die Ventilatoren 17 und 7, Umgebungsluft zunächst durch den Wärmetauscher 16 und anschließend durch den Erhitzer 5 in den Wärmetauscher 6 gelenkt. Die Strömungsrichtung hat sich damit genau umgekehrt. In dieser Teilbetriebsphase vertauschen somit die Sorptionsbehälter 11 und 1 ihre Funktion, ebenso die Arbeitsmitteldampfquellen bzw. -senken 12 und 2. Jetzt wird, bedingt durch die aus der Umgebung einströmende Luft, das Sorptionsmittel im Sorptionsmittelbehälter 11 abgekühlt. Dadurch wird Arbeitsmitteldampf über den Arbeitsmitteldampfkanal 14 aus der Arbeitsmitteldampfquelle 12 angesaugt und adsorbiert. Die den Wärmetauscher 16 verlassende, vorgewärmte Luft wird im Erhitzer 5 weiter erwärmt und in diesem heißen Zustand in den Wärmetauscher 6 gelenkt, um hier das Sorptionsmittel und den Wärmetauscher zu erhitzen. Das Sorptionsmittel wird desorbiert und der Arbeitsmitteldampf verläßt über die Arbeitsmitteldampfleitung 4 den Sorptionsbehälter 1 in Richtung Arbeitsmitteldampfsenke 2. Die den Wärmetauscher 6 verlassende Luft ist also deutlich kälter als die Luftmasse, welche in den Wärmetauscher 6 eindringt, jedoch wärmer als die angesaugte Umgebungsluft. Auch während dieser Teilbetriebsphase sind die Wärmetauscherbereiche, welche näher am Erhitzer 5 liegen, deutlich wärmer als die anderen.

Im Anschluß an diese zweite Teilbetriebsphase wird die Strömungsrichtung der Luft wieder geändert, so daß erneut die Verhältnisse gem. Fig. 1 vorliegen.

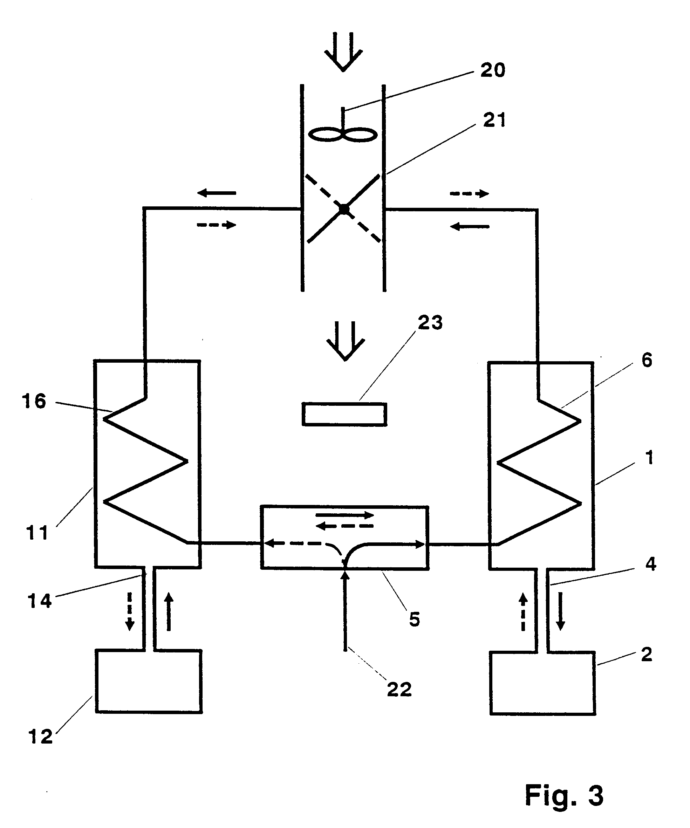

Auch in Fig. 3 finden sich, wie schon in Fig. 1 und Fig. 2 beschrieben, Sorptionsmittelbehälter 1 und 11, Arbeitsmitteldampfkanäle 4 und 14 sowie die Arbeitsmitteldampfsenken bzw. -quellen 2 und 12. Im Unterschied zu den Fig. 1 und 2 sind hier jedoch beide Teilbetriebsphasen in einer Fig. dargestellt.

Mittels eines Luftgebläses 20 wird Umgebungsluft, geführt über eine Klappe 21, entgegen dem Uhrzeigersinn, durch den Wärmetauscher 16 und von dort in den Erhitzer 5 geblasen. Im Erhitzer 5 wird die erwärmte Luft mit einem heißen Abgasstrom 22 vermischt und weiter erhitzt. In diesem Zustand tritt sie in den Wärmetauscher 6 ein, kühlt sich bei dessen Durchströmung ab und verläßt, wiederum geführt durch die Klappe 21, den Prozeß. Da die Abluft wärmer ist als die angesaugte Umgebungsluft, ist in diesem Beispiel ein weiterer Wärmetauscher 23 nachgeschaltet, um diese Restwärme beispielsweise an einen Warmwasserboiler abzuführen. Am Ende dieser ersten Teilphase wird die Klappe 21 um 90° verstellt (gestrichelte Position), so daß nunmehr Umgebungsluft über das Gebläse 20 im Uhrzeigersinn durch den Wärmetauscher 6, den Erhitzer 5, den Wärmetauscher 16 und im Anschluß daran durch den Wärmetauscher 23 gelenkt wird. Auch in dieser Teilbetriebsphase wird im Erhitzer 5, Abgas 22 mit der aus dem Wärmetauscher 6 kommenden warmen Luft vermischt und mit der sich einstellenden höheren Mischtemperatur in den Wärmetauscher 16 weitergeleitet. Die Adsorptions- bzw. Desorptionsreaktionen in den Sorptionsbehältern 1 und 11 sind bereits aus den Beschreibungen zu den Fig. 1 und 2 bekannt.

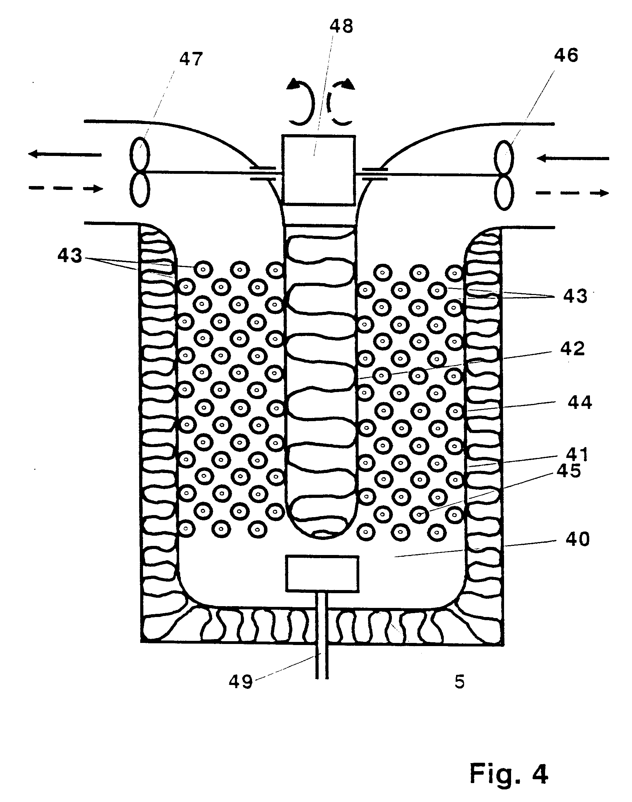

Fig. 4 zeigt eine weitere Sorptionsmittelbehälter-Anordnung im Schnitt. Ein wärmeisolierter, U-förmiger Strömungskanal 40 wird aus Begrenzungswänden 41 und 42 gebildet. In den beiden Schenkeln des Strömungskanals 40 sind zwei Sorptionsmittelbehälter-Bündel eingebracht, welche aus Metall-Wellschläuchen 43 bestehen. Diese Wellschläuche enthalten im Inneren das Sorptionsmittel 44 und jeweils einen Strömungskanal 45. An den offenen Enden des U-förmigen Strömungskanals 40 sind Ventilatorflügel 46 und 47 angeordnet, welche über einen Elektromotor 48 angetrieben werden. Dieser kann seine Drehrichtung wechseln, so daß die von den Ventilatoren 46 und 47 geförderte Luft ihre Strömungsrichtung ändert.

Während der ersten Teilbetriebsphase wird beispielsweise Umgebungsluft über den Ventilator 46 angesaugt und über die rechten Sorptionsmittelbehälter 43 geblasen. Im Scheitelpunkt des U-förmigen Strömungskanals 40 befindet sich ein Erhitzer 5, der in diesem Beispiel ein Gasbrenner ist, dem über eine Zuleitung 49 Propangas zugeführt wird, welches mit der über den Ventilator 46 zugeführten Luft verbrennt. Durch diesen Verbrennungsvorgang wird die über das rechte Wellschlauchbündel vorgewärmte Luft weiter erhitzt, über das linke Sorptionsmittelbehälter-Bündel geleitet und vom Ventilator 47 an die Umgebung ausgeblasen. Das rechte Sorptionsmittelbehälter-Bündel wird somit gekühlt, während das linke Sorptionsmittelbehälter-Bündel erhitzt wird. Sobald die Drehrichtung des Antriebsmotors 48 wechselt, wird die Luft in entgegengesetzter Richtung gefördert. Die über den Ventilator 47 angesaugte Umgebungsluft wird beim Durchströmen des linken Sorptionsmittelbehälter-Bündels erwärmt, durch den Gasbrenner weiter erhitzt, um dann die aufgenommene Wärme an das rechte Sorptionsmittelbehälter-Bündel abzugeben. Diese Anordnung erlaubt beispielsweise eine klappenlose Steuerung des Sorptionsprozesses.

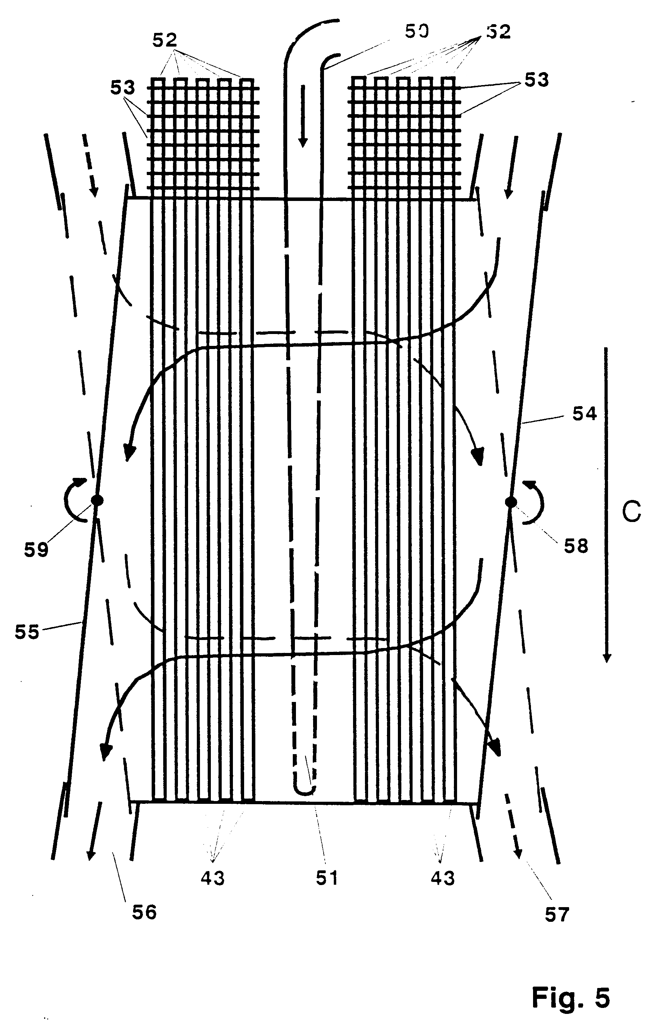

Fig. 5 zeigt schließlich eine Sorptionsmittelbehälter-Anordnung, welche beispielsweise am Ende eines Auspuffrohres 50 angeordnet ist. Symmetrisch um das perforierte Rohrende 51 des Auspuffrohres 50 sind zwei Sorptionsmittelbehälter angeordnet. Diese bestehen auch hier aus Metall-Wellschläuchen 43, welche zu zwei Sorptionsmittelbehälter-Bündeln verschnürt sind. Das jeweils eine Ende der Metall-Wellschläuche 43 ist mit Kondensator/Verdampfer-Rohren 52 verbunden, welche mit Wärmetauscherlamellen 53 bestückt sind, um die Kondensationswärme an die Umgebungsluft abzugeben bzw. beim Verdampfen des Arbeitsmittels Wärme aus der Umgebung aufzunehmen.

Die gesamte Sorptionsmittelbehälter-Anordnung nach Fig. 5 befindet sich in einer starken Luftströmung, gekennzeichnet durch den Pfeil C. Diese Strömung kann beispielsweise der Fahrtwind eines fahrenden Kraftfahrzeuges sein. Über zwei schwenkbare Klappen 54 und 55, wird zunächst das rechte Sorptionsmittelbehälter-Bündel vom Fahrtwind durchströmt. Nachdem heißes Abgas über das perforierte Rohrende 51 hinzugemischt wurde, wird auch das linke Sorptionsmittelbehälter-Bündel durchströmt. Über den Ausgang 56 verläßt das Abgas/Luft-Gemisch das System. Zur Umkehrung des Prozesses werden lediglich die Klappen 54 und 55 an den Drehachsen 58 und 59 in die gestrichelt gezeichnete Position verdreht. Damit wird der Fahrtwind zunächst durch das linke Sorptionsmittelbehälter-Bündel gepreßt, sodann durch heiße Abgase weiter erhitzt, um dann nach Durchströmen des rechten Bündels das System durch den Ausgang 57 zu verlassen.

Die Vorteile dieser Anordnung liegen insbesondere darin, daß zum Betrieb keine Ventilatoren oder Gebläse notwendig sind. Durch einfache Umstellung der Klappen 54 und 55 wird die Strömung innerhalb der Sorptionsmittelbehälter-Anordnung geändert. Bei einer Anordnung des Systems am Ende des Auspuffrohres eines Kraftfahrzeuges kann aus dem Wärmeinhalt der heißen Abgase eine 〉〉Klimaanlage〈〈 betrieben werden.

## Patentansprüche

1. Sorptionssystem mit zwei Sorptionsmittelbehältern mit jeweils mihdestens einem Warmetauscher zur Aufnahme bzw. Abgabe von Warme, gefüllt mit einem Sorptionsmittel, welches ein Arbeitsmittel unter Warmefreisetzung sorbiert und unter Wärmeaufnahme desorbiert,
und mit den Sorptionsmittelbehältern verbundenen Dampfquellen bzw. Dampfsenken zur Bereitstellung bzw. Aufnahme von Arbeitsmitteldampf und mit einem Warmeträgermedium, das wahrend einer ersten Teilbetriebsphase durch den Wärmetauscher des ersten Sorptionsmittelbehälters strömt dessen Sorptionsmittel abkühlt und sich selbst erwärmt,
anschließend durch Wärmezufuhr mittels eines Erhitzers weiter erhitzt wird, in diesem Zustand den Wärmetauscher des zweiten Sorptionsmittelbehälters durchströmt, sich dabei abkühlt und dessen Sorptionsmittel erwärmt und während einer zweiten Teilbetriebsphase unter Umkehr der Strömungsrichtung durch den Wärmetauscher des zweiten Sorptionsmittelbehälters strömt, dessen Sorptionsmittel abkühlt und sich selbst erwärmt,
daran anschließend durch Wärmezufuhr mittels des Erhitzers erhitzt wird und in diesem Zustand den Wärmetauscher des ersten Sorptionsmittelbehälters durchströmt sich dabei abkühlt und dessen Sorptionsmittel erhitzt, wobei das Wärmeträgermedium ein Gasgemisch, insbesondere Luft ist und vor Durchströmen des jeweils wärmeabgebenden Wärmetauschers aus der Umgebungsluft angesaugt wird und nach Durchströmen des wärmeaufnehmenden Wärmetauschers in die Umgebungsluft abgegeben wird,
dadurch gekennzeichnet, daß
die Gestaltung und Anordnung der Wärmtauscher bezüglich der Durchströmung mittels des Wärmeträgermediums so gewählt ist, daß entlang des Wärmetauschers ein im wesentlichen linearer Temperaturgradient erhalten wird, der bei Strömungsumkehr erhalten bleibt, wobei die einzelnen Sorptionsmittelpartien entlang des Wärmetauschers zwischen unterschiedlichen Temperaturniveaus arbeiten.

2. Sorptionssystem nach Anspruch 1,
dadurch gekennzeichnet, daß
die Wärmezufuhr an das Wärmeträgermedium zwischen den beiden Wärmetauschern durch Vermischung mit heißen Gasen, insbesondere Verbrennungsgasen, erfolgt.

3. Sorptionssystem nach einem der vorausgehenden Ansprüche,
dadurch gekennzeichnet, daß
zur Aufrechterhaltung der Wärmeträgerströmung der Auftrieb des Wärmeträgermediums durch Dichteunterschiede ausgenutzt wird.

4. Sorptionssystem nach einem der vorausgehenden Ansprüche,
dadurch gekennzeichnet, daß
die Umkehr der Strömungsrichtung durch Umstellen eines Luft- Klappensystems erfolgt.

5. Sorptionssystem nach einem der vorausgehenden Ansprüche,
dadurch gekennzeichnet, daß
die Sorptionsmittelbehälter in einer Luftströmung angeordnet sind und die Klappen zur Umlenkung dieser Luftströmung ausgelegt sind.

6. Vorrichtung nach einem der vorausgehenden Ansprüche,
dadurch gekennzeichnet, daß
das Klappensystem über einen Thermostat steuerbar ist.

7. Sorptionssystem nach einem der vorausgehenden Ansprüche,
dadurch gekennzeichnet, daß
die Wärmetauscher Metallwellschläuche enthalten.

## Claims

1. Sorption system with two sorption media containers with in each case at least one heat exchanger for taking up or giving off heat, filled with a sorption medium which sorbs a working medium, liberating heat, and desorbs it, taking up heat, and with vapour sources or vapour stores for supplying or taking up working media vapour connected to the sorption medium containers, and with a heat carrying medium which during a first partial operation phase flows through the heat exchanger of the first sorption medium container, cools its sorption media and is itself heated, is then heated further by the introduction of heat by means of a heater, in this state flows through the heat exchanger of the second sorption medium container, in the process is cooled and heats its sorption medium, and during a second partial operation phase in which the direction of flow is reversed, flows through the heat exchanger of the second sorption medium container, cools its sorption media and is itself heated, is then heated further by the introduction of heat by means of the heater and in this state flows through the heat exchanger of the first sorption medium container, in the process is cooled and heats its sorption medium, the heat carrying media being a gas mixture, in particular air, and induced from the ambient air before flowing through the heat exchanger giving off heat, and released into the ambient air after flowing through the heat exchanger taking up heat, characterised in that as regards the flow of the heat carrying media the design and arrangement of the heat exchangers is such that along the heat exchanger an essentially linear temperature gradient is obtained which is maintained when the flow is reversed, the individual sorption medium parts along the heat exchanger working between different temperature levels.

2. Sorption system according to claim 1, characterised in that the introduction of the heat to the heat carrying medium is effected between the two heat exchangers by mixing with hot gases, in particular combustion gases.

3. Sorption system according to one of the preceding claims, characterised in that the lift of the heat carrying medium due to differences in density is utilised to maintain the flow of heat carrying medium.

4. Sorption system according to one of the preceding claims, characterised in that the reversal of the direction of flow is effected by switching an air flap system.

5. Sorption system according to one of the preceding claims, characterised in that the sorption medium containers are disposed in a stream of air and the flaps are designed to deflect this stream of air.

6. Device according to one of the preceding claims, characterised in that the flap system can be controlled by means of a thermostat.

7. Sorption system according to one of the preceding claims, characterised in that the heat exchangers contain corrugated metal tubes.

## Revendications

1. Système à sorption comportant deux récipients à agent adsorbant ayant chacun au moins un échangeur de chaleur pour absorber ou céder de la chaleur et remplis d'un agent adsorbant, qui absorbe un fluide de travail en dégageant de la chaleur et le désorbe tout en absorbant de la chaleur, et comportant des sources de vapeur et des puits de vapeur, qui communiquent avec les récipients contenant l'agent adsorbant et servent à envoyer ou à absorber de la vapeur du fluide de travail, et un fluide caloporteur, qui pendant une première phase partielle de fonctionnement passe dans l'échangeur de chaleur du premier récipient contenant l'agent adsorbant, refroidit ce dernier et s'échauffe, et
continue à être chauffé ensuite par apport de chaleur au moyen d'un dispositif de chauffage et passe, dans cet état, dans l'échangeur de chaleur du second récipient contenant l'agent adsorbant, se refroidit et échauffe l'agent adsorbant de ce récipient et, pendant une seconde phase partielle de fonctionnement, passe, avec inversion du sens d'écoulement, dans l'échangeur de chaleur du second récipient contenant l'agent adsorbant, refroidit ce dernier et s'échauffe, et
ensuite est chauffé par apport de chaleur au moyen du dispositif de chauffage et, dans cet état, passe dans l'échangeur de chaleur du premier récipient contenant l'agent adsorbant, se refroidit et échauffe l'agent adsorbant de ce récipient, le fluide caloporteur étant un mélange de gaz, notamment d'air et étant aspiré de l'air ambiant, avant de passer dans l'échangeur de chaleur qui cède de la chaleur, et étant envoyé à l'air ambiant après avoir passé dans l'échangeur de chaleur qui absorbe de la chaleur,
caractérisé par le fait que
la configuration et la disposition des échangeurs de chaleur sont choisies en rapport avec le passage du fluide caloporteur, de manière à obtenir, le long de l'échangeur de chaleur, un gradient de température essentiellement linéaire qui est conservé lors d'une inversion de l'écoulement, les parties de l'agent adsorbant travaillant le long de l'échangeur de chaleur entre des niveaux de température différents.

2. Système à sorption suivant la revendication 1, caractérisé par le fait que l'apport de chaleur au fluide caloporteur s'effectue entre les deux échangeurs de chaleur, par mélange à des gaz chauds, notamment des gaz de combustion.

3. Système à sorption suivant l'une des revendications précédentes, caractérisé par le fait que la force ascensionnelle du fluide caloporteur due à des différences de température est utilisée pour maintenir l'écoulement du fluide caloporteur.

4. Système à sorption suivant l'une des revendications précédentes, caractérisé par le fait que l'inversion au sens d'écoulement est obtenue par changement de position d'un système à volet de déflection d'air.

5. Système à sorption suivant l'une des revendications précédentes, caractérisé par le fait que les récipients contenant l'agent adsorbant sont disposés dans un courant d'air et que les volets sont conçus de manière à dévier ce courant d'air.

6. Système à sorption suivant l'une des revendications précédentes, caractérisé par le fait que le système de volets peut être commandé par un thermostat.

7. Système à sorption suivant l'une des revendications précédentes, caractérisé par le fait que les échangeurs de chaleur contiennent des tuyaux métalliques ondulés.
